# EUROPEAN PATENT APPLICATION

(11) **EP 1 538 189 A1**
(43) Date of publication of application: **08.06.2005**
(21) Application number: 03078814.5
(22) Date of filing: 07.12.2003
(51) Int. Cl.: C09K 5/10

(54) **Heat transfer fluids for low temperature application comprising aromatic hydrocarbons**

(71) Applicant: Solutia Europe N.V./S.A., 1050 Brussels (BE)
(72) Inventor: Notte, Patrick Pierre, 1300 wavre (BE); Davidson, David Lee, Deceased (US); Tria, John Joseph, Cantonnment, GL 32533 (US)
(74) Representative: Colens, Alain

(57) **Abstract**

Heat transfer fluids which can be used over a broad range of temperatures such as from -125 °C to +175 °C are disclosed. These transfer fluids consist essentially of a mixture of two either narrowly defined structurally non-identical alkyl- or polyalkyl-benzene components or a mixture of a narrowly defined aromatic alkyl- or polyalkyl-benzene component and an aliphatic hydrocarbons component. The level of the various ingredients is such that the transfer fluids exhibit a cloud point below -100 °C, a vapor pressure at +175 °C below 827 kPa and a viscosity, measured at the cloud point temperature +10 °C, below 400 cP.

## Description

This invention relates to heat transfer fluids which can beneficially be used over a broad range of temperatures such as at temperatures from below -125 °C up to +175 °C. The inventive compositions consist essentially of a combination of, at least, two structurally non-identical aromatic components selected from the group consisting of polyalkyl-benzene and alkyl-benzene wherein the alkyl moiety is represented by branched or straight carbon chains having from 1 to 6 carbon atoms provided that the total number of carbon atoms in the alkyl moiety(ies) is in the range of from 1 to 10 or mixtures of such an aromatic component and an aliphatic hydrocarbon having a linear or branched chain with from 5 to 15 carbon atoms or mixtures thereof. The compositions are formulated to possess: a cloud point below -100 °C, preferably in the range of from -110 °C to -175 °C; a vapor pressure at +175 °C, below 827 kPa; and a viscosity, measured at the cloud point temperature of the fluid +10 °C, below 400 cP.

Transfer fluids, in particular heat transfer fluids, have been used commercially for a long time. As one would consequently expect, the prior art relating to this domain is crowded and diverse and possessed of multiple improvement proposals, in particular with respect to improving the efficacy of such fluids at low temperatures. Presently, commercial heat transfer fluids can be used at temperatures down to -80 °C. Below that temperature, viscosity can be too high and/or products can be converted into solids. Several commercial products were formulated to mitigate the negatives but were found to be unsuitable for application over a broad range of temperatures because of significant negatives including too high vapor pressures, too low flash points and/or too high viscosities at the operating temperatures. One of such commercial executions, which is based on methylcyclopentane, shows significant negatives, low flash point (-25 °C) and high vapor pressure which can render its utilization aleatory. A commercial silicon-based product has too high viscosity and freezing point and is, in addition, economically less attractive.

US-A-6,086,782 discloses heat transfer fluid compositions containing major, possibly comparable, levels of a terpene and an alkylbenzene. These compositions are said to retain the liquid state at any temperature in the range of from -18 °C to -115 °C. US-A-5,484,547 describes low temperature heat transfer fluids consisting of major levels of a glycol component and a second component selected from dioxolanes, glycol formal and dioxanes and minor levels of conventional additives. FR-A-1.427.017 relates to refrigerant fluids containing a mixed isopropyl/isobutyl orthosilicate tetraester and a minor level of an ethyl/butyl propyleneglycol diether. These compositions can be used at temperatures down to -54 °C. Phillip E. Tuma, Pharmaceutical Technology, March 2000, pages 104-114, has summarized various obstacles on the road to achieving beneficial low temperature heat transfer performance. Particular attention is drawn, among others, to flammability, environmental effects and thermal performance. EP-A-92 089 922.1 pertains to working fluids comprising a mixture of fluoroalkanes and hydrofluoroalkanes, possibly in equal weight proportions. The compositions can be used in refrigerators, freezers, heat pumps and air conditioning systems. Hydrofluorocarbons do not meet the requirements of this invention among others because of excessive vapor pressures at temperatures above e.g. 100 °C. While known fluids could be used at selected low temperature conditions, such known fluids are generally inadequate, in particular for use at higher temperatures.

The negatives attached to prior art low-temperature fluids are operationally significant; the actual application of the art technology is capital intensive and cannot yield manufacturing flexibility over a broad range of temperatures.

It is therefore a major object of this invention to provide heat transfer fluids capable of operating over a broad range of temperatures. It is another object of this invention to formulate heat transfer fluids capable of being used effectively at a broad range of temperatures, particularly from -125 °C to +175 °C while avoiding significant vapor pressure build-up and maintaining adequate fluidity properties. It is yet another object of this invention to formulate heat transfer fluids having acceptable physical properties. The foregoing and other benefits can now be secured from heat transfer fluids comprising a mixture of, at least, two structurally non-identical alkyl- and/or polyalkylbenzenes, or a mixture of an aromatic alkyl- and/or polyalkyl-benzene component and an aliphatic hydrocarbon, or mixtures thereof. The levels of the individual components in a fluid composition of this invention are selected such that the composition exhibits cumulative physical properties, including a cloud point below -100 °C, a vapor pressure at +175 °C below 827 kPa, and a viscosity, measured at the cloud point temperature +10°C, below 400 cP. The inventive technology herein is described in more detail hereinafter.

Particular terms as used throughout the description and the claims shall have the following meaning:
"cloud point" is defined as the temperature of equilibrium between a multicomponent liquid of specified composition and the first solid phase that appears when that liquid is cooled, measured in accordance with the method of ASTM D-2500. The cloud point of the liquid heat transfer fluid can also be calculated in accordance with the method of S.I. SANDERS, Chemical and Engineering Thermodynamics, Wiley, New York, 1977, Chapter 8;
"vapor pressure" is measured thereby using the method of PROCESS HEATING, November/December 1994, page 27, Volume 1, Number 4, or calculated by methods described in R.C. REID, J.M. PRAUSNITZ and T.K. SHERWOOD, The Properties of Gases and Liquids, McGraw-Hill, New York, 1977;
"viscosity" is determined in accordance with the method of ASTM D-445, or calculated by the method of VAN VELZEN, CARDOZO and LANGENKAMP as described in R.C. REID, J.M. PRAUSNITZ and T.K. SHERWOOD, The Properties of Gases and Liquids, McGraw-Hill, New York, 1977, Chapter 9;
the term "alkyl" embraces, unless defined differently, straight or branched species;
the term "aliphatic hydrocarbon" is/can be used interchangeably with the term "aliphatic alkane";
"percent" or "%" refers, unless defined more specifically, to percent or % by weight; and
the term "structurally non-identical" means that the first aromatic component has a different molecular weight as compared to the second aromatic component or that the first and the second aromatic components are structural isomers.

This invention concerns heat transfer fluids which can be used beneficially over a broad range of temperatures such as at temperatures from below -125 °C up to +175 °C. The heat transfer fluid compositions herein consist essentially of (a) a mixture of at least two structurally non-identical components selected from the group consisting of alkyl-benzene and polyalkyl-benzene wherein the alkyl moiety is represented by branched or straight carbon chains having from 1 to 6 carbon atoms provided that the total number of carbon atoms in the alkyl moiety(ies) is in the range of from 1 to 10; and (b) a mixture of an aromatic component selected from the group consisting of alkyl-benzene and polyalkyl benzene wherein the alkyl moiety is represented by branched or straight carbon chains having from 1 to 6 carbon atoms provided that the total number of carbon atoms in the alkyl moiety(ies) is in the range of from 1 to 10 and an aliphatic hydrocarbon having a linear or branched chain with from 5 to 15 carbon atoms or mixtures thereof, at a level such that the composition has a cloud point below -100 °C, preferably in the range of from -110 °C to -175 °C, a vapor pressure, at +175 °C, below 827 kPa, and a viscosity, measured at the cloud point temperature +10 °C, below 400 cP.

In preferred executions herein, the aliphatic hydrocarbon contains from 5 to 10 carbon atoms, the viscosity is below 300 cP and the vapor pressure, at +175 °C, is below 621 kPa.

The heat transfer fluids of this invention consist essentially of a mixture of at least two structurally non-identical aromatic components selected from alkyl-benzene and polyalkyl-benzene. The two structurally non-identical aromatic components are either distinguished by different molecular weights and thus translate, for example, into a different number of carbon atoms and/or a different number of hydrogen atoms in such aromatic components. Such non-identical aromatics can also be represented by structural isomers. Examples of structurally non-identical isomers are: ortho- and meta-xylene; and n-propylbenzene and isopropylbenzene. Examples of non-identical aromatic components having the same number of carbon atoms and a different number of hydrogen atoms are n-butylbenzene and tetrahydronaphthalene. The ponderal ratios of the structurally non-identical aromatic components are generally within the range of from 1st component: 2nd component of from 95 : 5 to 5 : 95, preferably in the range of from 80 : 20 to 20 : 80. The alkyl moiety in the aromatic component is preferably represented by any one of the following species: methyl; ethyl; dimethyl; ethylmethyl; trimethyl; n-propyl; n-butyl; methyl(n-propyl); di-ethyl; tetramethyl; n-pentyl; ethyl(n-propyl); methyl(n-butyl); n-hexyl; di(n-propyl); tri-ethyl or mixtures thereof.

Examples of individually preferred aromatic components are toluene, n-propylbenzene, ethylbenzene and n-butylbenzene. The aromatic species can be used in preferred combinations of structurally non-identical species (with or without aliphatic hydrocarbons) such as, at least, binary combinations of:
toluene/ethylbenzene; toluene/n-propylbenzene; ethylbenzene/n-butylbenzene; n-propylbenzene/n-butylbenzene; ethylbenzene/n-propylbenzene; and toluene/n-butylbenzene. Examples of suitable ternary combinations of non-identical aromatic components, with or without aliphatic hydrocarbons, are: n-propylbenzene/toluene/ethylbenzene; ethylbenzene/n-propylbenzene/n-butylbenzene; n-propylbenzene/n-butylbenzene/toluene and ethylbenzene/toluene/n-butylbenzene. The ponderal ratios of aromatic/alkane combinations are frequently in the range of from 10 : 90 to 90 : 10, preferably of from 15 : 85 to 80 : 20, and more preferably of from 20 : 80 to 70 : 30.

The essential aliphatic alkane (aliphatic hydrocarbon) component has a linear or branched chain with from 5 to 15, preferably from 5 to 10 carbon atoms.

Representative and preferred species of the aliphatic alkanes are: pentane-2,2,4-trimethyl; pentane-2,3,4-trimethyl; pentane-2-methyl; pentane-3-methyl; hexane-2-methyl; hexane-3-methyl; n-hexane; hexane-2,2-dimethyl; hexane-3,3-dimethyl; n-heptane; heptane-4-methyl; n-octane; and octane-2-methyl. The aliphatic alkane component can be represented by the individual species or by a mixture of species.

The inventive compositions herein can contain, as optional components, additive levels, generally less than 8 %, preferably less than 5 %, expressed in reference to the essential components (100 %) of the heat transfer fluid composition, of fully hydrogenated hydrocarbons corresponding to the essential aromatic component in accordance with the claims. The use of unsaturated hydrocarbons, such as terpenes and unsaturated derivatives and/or analogues thereof can adversely affect the performance of the claimed fluids and shall therefore also be limited to levels below 8 %, preferably below 5 % expressed in reference to the essential components (100 %) of the claimed heat transfer fluid.

The inventive compositions can in addition contain, as optional components, additive levels of ingredients that can serve for optimizing and enhancing performance of the inventive compositions. The like additives are well-known in the domain of heat transfer fluids and are generally used in art-established levels. Specific examples of suitable additives include antioxidants, dyes and acid scavengers. The term "additive level" is meant to define a cumulative level of from 0.01 % to 4 %, preferably from 0.01 % to 2 %

Performance parameters of a series of examples in accordance with this invention were determined thereby using the methods recited in the patent description. The results are listed in the following tables whereby the column headings refer to the following:
A = Sample Number;
B = Cloud Point in °C;
C = Vapor Pressure at +175 °C in kPa; and
D = Viscosity in cP at cloud point temperature + 10 °C.
E = Ponderal (weight %) Fraction of Components.

| A | B | C | D | E | COMPONENTS |
|---|---|---|---|---|---|
| 8 | -129.7 | 561.9 | 37.5 | 41.8 | 2-Methylhexane |
| | | | | 30.4 | n-Propylbenzene |
| | | | | 27.8 | Toluene |
| 9 | -128.6 | 309.5 | 60 | 36.6 | n-Propylbenzene |
| | | | | 28.3 | Ethylbenzene |
| | | | | 35.1 | Toluene |
| 10 | -128.5 | 617 | 30.4 | 47.5 | 2-Methylhexane |
| | | | | 23.6 | Ethylbenzene |
| | | | | 28.9 | Toluene |
| | | | | | |
| 11 | -127.7 | 524.6 | 32 | 48.7 | 2-Methylhexane |
| | | | | 30.4 | n-Propylbenzene |
| | | | | 20.9 | Ethylbenzene |
| | | | | | |
| 12 | -127.5 | 784 | 21 | 63.6 | 2-Methylhexane |
| | | | | 13.4 | n-Hexane |
| | | | | 23.0 | Toluene |
| | | | | | |
| 13 | -127 | 700.5 | 22 | 61.8 | 2-Methylhexane |
| | | | | 24.7 | n-Propylbenzene |
| | | | | 13.5 | n-Hexane |
| | | | | | |
| 14 | -126.8 | 624 | 28 | 54.7 | 2-Methylhexane |
| | | | | 27 | Toluene |
| | | | | 18.3 | n-Butylbenzene |
| | | | | | |
| 15 | -126.3 | 703.2 | 23 | 66.2 | 2-Methylhexane |
| | | | | 20.6 | Toluene |
| | | | | 13.2 | n-Heptane |
| | | | | | |
| 16 | -126.1 | 537.8 | 29.5 | 59.9 | 2-Methylhexane |
| | | | | 26.5 | n-Propylbenzene |
| | | | | 13.6 | n-Butylbenzene |
| | | | | | |
| 17 | -125.3 | 279.2 | 62 | 40.2 | n-Propylbenzene |
| | | | | 36.7 | Toluene |
| | | | | 23.1 | n-Butylbenzene |
| 18 | -125 | 580.5 | 25 | 61.3 | 2-Methylhexane |
| | | | | 21.0 | Ethylbenzene |
| | | | | 17.7 | n-Butylbenzene |
| | | | | | |
| 19 | -124 | 320.6 | 45.6 | 34.3 | Ethylbenzene |
| | | | | 40.2 | Toluene |
| | | | | 25.5 | n-Butylbenzene |
| | | | | | |
| 19 | -123.7 | 713.6 | 20 | 74.6 | 2-Methylhexane |
| | | | | 25.4 | Toluene |
| | | | | | |
| 20 | -123.3 | 608.1 | 21.5 | 71.4 | 2-Methylhexane |
| | | | | 28.6 | n-Propylbenzene |
| | | | | | |
| 21 | -123.1 | 716.4 | 24 | 27.1 | 2-Methylpentane |
| | | | | 42.5 | n-Propylbenzene |
| | | | | 30.4 | Ethylbenzene |
| | | | | | |
| 22 | -122.7 | 433 | 43.3 | 17.1 | 2,2,4-Trimethylpentane |
| | | | | 45.0 | n-Propylbenzene |
| | | | | 37.9 | Toluene |
| | | | | | |
| 23 | -122.1 | 173.7 | 58.1 | 42.7 | n-Propylbenzene |
| | | | | 32.3 | Ethylbenzene |
| | | | | 25.0 | n-Butylbenzene |
| | | | | | |
| 24 | -121.8 | 441.9 | 31.6 | 48.9 | n-Propylbenzene |
| | | | | 8.3 | n-Hexane |
| | | | | 42.8 | Toluene |
| | | | | | |
| 25 | -121.7 | 370.9 | 39.3 | 49.3 | n-Propylbenzene |
| | | | | 42.1 | Toluene |
| | | | | 8.6 | n-Heptane |
| | | | | | |
| 26 | -121.3 | 505.4 | 32 | 22.5 | 2,2,4-Trimethylpentane |
| | | | | 36.6 | Ethylbenzene |
| | | | | 40.9 | Toluene |
| | | | | | |
| 27 | -121.1 | 541.2 | 22.8 | 11.6 | n-Hexane |
| | | | | 41.7 | Ethylbenzene |
| | | | | 46.7 | Toluene |
| | | | | | |
| 28 | -120.6 | 375 | 39.5 | 27.1 | 2,2,4-Trimethylpentane |
| | | | | 42.2 | n-Propylbenzene |
| | | | | 30.7 | Ethylbenzene |
| | | | | | |
| 29 | -120.3 | 651.5 | 20.5 | 53.6 | 2,2,4-Trimethylpentane |
| | | | | 26.6 | n-Propylbenzene |
| | | | | 19.8 | n-Hexane |
| | | | | | |
| 29 | -120.0 | 427.5 | 28.2 | 42.1 | Ethylbenzene |
| | | | | 47.7 | Toluene |
| | | | | 10.2 | n-Heptane |
| | | | | | |
| 30 | -119 | 319.2 | 38.2 | 53.6 | n-Propylbenzene |
| | | | | 46.4 | Toluene |
| | | | | | |
| 31 | -118.8 | 275.1 | 35.6 | 51.4 | n-Propylbenzene |
| | | | | 37.9 | Ethylbenzene |
| | | | | 10.7 | n-Heptane |
| | | | | | |
| 32 | -118.5 | 513.6 | 32.2 | 38.6 | 2,2,4-Trimethylpentane |
| | | | | 34.5 | Toluene |
| | | | | 26.9 | n-Butylbenzene |
| | | | | | |
| 33 | -118.2 | 324.7 | 29 | 45.4 | n-Propylbenzene |
| | | | | 40.3 | n-Hexane |
| | | | | 14.3 | Ethylbenzene |
| | | | | | |
| 34 | -117.5 | 560 | 20.3 | 15.9 | n-Hexane |
| | | | | 47.5 | Toluene |
| | | | | 36.6 | n-Butylbenzene |
| | | | | | |
| 35 | -117.2 | 376.5 | 26.3 | 47.5 | Ethylbenzene |
| | | | | 52.5 | Toluene |
| | | | | | |
| 36 | -116.9 | 403.3 | 24.7 | 51.5 | n-Propylbenzene |
| | | | | 16.3 | n-Hexane |
| | | | | 32.2 | n-Butylbenzene |
| | | | | | |
| 37 | -116.6 | 440.6 | 29.6 | 47.3 | 2,2,4-trimethylpentane |
| | | | | 28.4 | Ethylbenzene |
| | | | | 24.3 | n-Butylbenzene |
| | | | | | |
| 38 | -116.0 | 407.5 | 28.3 | 48.7 | Toluene |
| | | | | 13.3 | n-Heptane |
| | | | | 38.0 | n-Butylbenzene |
| | | | | | |
| 39 | -115.8 | 200.6 | 35.7 | 57.1 | n-Propylbenzene |
| | | | | 42.9 | Ethylbenzene |
| | | | | | |
| 40 | -115.5 | 230.3 | 39.1 | 52.7 | n-Propylbenzene |
| | | | | 25.4 | n-Heptane |
| | | | | 21.9 | n-Butylbenzene |
| | | | | | |
| 41 | -115.1 | 481.9 | 18.1 | 18.8 | n-Hexane |
| | | | | 43.4 | Ethylbenzene |
| | | | | 37.8 | n-Butylbenzene |
| | | | | | |
| 42 | -115.0 | 602.6 | 14.4 | 53.6 | n-Propylbenzene |
| | | | | 24.5 | n-Hexane |
| | | | | 21.9 | n-Heptane |
| | | | | | |
| 43 | -113.7 | 296.5 | 26.6 | 45.5 | Ethylbenzene |
| | | | | 15.8 | n-Heptane |
| | | | | 38.7 | n-Butylbenzene |
| | | | | | |
| 44 | -113.7 | 478.5 | 24.4 | 67.9 | 2,2,4-Trimethylpentane |
| | | | | 32.1 | n-Propylbenzene |
| | | | | | |
| 45 | -113.6 | 622.6 | 20.6 | 75.2 | 2,2,4-Trimethylpentane |
| | | | | 24.8 | Toluene |
| | | | | | |
| 46 | -113.2 | 711.5 | 10.7 | 32.7 | n-Hexane |
| | | | | 39.0 | Toluene |
| | | | | 28.3 | n-Heptane |
| | | | | | |
| 47 | -111.9 | 331 | 27.7 | 55.0 | Toluene |
| | | | | 45.0 | n-Butylbenzene |
| | | | | | |
| 48 | -111.6 | 125 | 45.6 | 60.4 | n-Propylbenzene |
| | | | | 39.6 | n-Butylbenzene |
| | | | | | |
| 49 | -111.2 | 712.2 | 10.3 | 34.0 | n-Hexane |
| | | | | 29.9 | n-Heptane |
| | | | | 36.1 | n-Butylbenzene |

The foregoing testing results illustrate the superior performance of the inventive technology.

## Claims

1. Heat transfer fluid, for use over a broad range of temperatures, consisting essentially of a combination selected from:
(a) a mixture of at least two structurally non-identical aromatic components selected from the group consisting of alkyl-benzene and polyalkyl-benzene wherein the alkyl moiety is represented by branched or straight carbon chains having from 1 to 6 carbon atoms provided that the total number of carbon atoms in the alkyl moiety(ies) is in the range of from 1 to 10; and
(b) a mixture of an aromatic component selected from the group consisting of alkyl-benzene and polyalkyl-benzene wherein the alkyl moiety is represented by branched or straight carbon chains having from 1 to 6 carbon atoms provided that the total number of carbon atoms in the alkyl moiety(ies) is in the range of from 1 to 10 and an aliphatic hydrocarbon having a linear or branched chain with from 5 to 15 carbon atoms, or mixtures thereof;
at a level such that the composition has a cloud point below -100 °C, preferably in the range of from -110 °C to -175 °C, a vapor pressure at +175 °C, below 827 kPa, and a viscosity, measured at the cloud point temperature of the fluid + 10 °C, below 400 cP.

2. The heat transfer fluid in accordance with Claim 1 wherein the alkyl moiety in the aromatic component is selected from the group of methyl, ethyl, dimethyl, ethylmethyl, trimethyl, n-propyl, n-butyl, methyl(n-propyl), di-ethyl, tetramethyl, n-pentyl, ethyl(n-propyl), methyl(n-butyl), n-hexyl, di(n-propyl), tri-ethyl or mixtures thereof.

3. The heat transfer fluid in accordance with Claim 1 having a vapor pressure at +175 °C below 621 kPa.

4. The heat transfer fluid in accordance with Claim 1 having a viscosity below 300 cP.

5. The heat transfer fluid in accordance with Claim 1 wherein the aliphatic hydrocarbon contains from 5 to 10 carbon atoms.

6. The heat transfer fluid in accordance with Claim 1 wherein the aliphatic hydrocarbon is represented by: pentane-2,2,4-trimethyl; pentane-2,3,4-trimethyl; pentane-2-methyl; pentane-3-methyl; hexane-2-methyl; hexane-3-methyl; n-hexane; hexane-2,2-dimethyl; hexane-3,3,-dimethyl; n-heptane; heptane-4-methyl; n-octane; and octane-2-methyl and mixtures thereof.

7. The heat transfer fluid in accordance with Claim 1(a) wherein the ponderal ratio of the structurally non-identical aromatic components is in the range of from 95 : 5 to 5 : 95.

8. The heat transfer fluid in accordance with Claim 1(b) wherein the ponderal ratio of aromatic component : hydrocarbon component is in the range of from 10 : 90 to 90 : 10.

9. The heat transfer fluid in accordance with Claim 7 wherein the aromatic components are represented by binary combinations of: toluene/ethylbenzene; toluene/n-propylbenzene; toluene/n-butylbenzene; ethylbenzene/n-propylbenzene and n-propylbenzene/n-butylbenzene.

10. The heat transfer fluid in accordance with Claim 7 wherein the ponderal ratio of structurally non-identical aromatic components is in the range of from 80 : 20 to 20 : 80.

11. The heat transfer fluid in accordance with claim 8 wherein the ponderal ratio of aromatic component : hydrocarbon component is in the range of from 15 : 85 to 80 : 20.

12. The heat transfer fluid in accordance with Claim 8 wherein the ponderal ratio of aromatic component : hydrocarbon component is in the range of from 20 : 80 to 70 : 30.

13. The heat transfer fluid in accordance with Claim 7 wherein the aromatic components are represented by ternary combinations of: n-propylbenzene/toluene/ethylbenzene; ethylbenzene/n-propylbenzene/n-butylbenzene; n-propylbenzene/n-butylbenzene/toluene; and ethylbenzene/toluene/n-butylbenzene.
